**Europäisches Patentamt**

**European Patent Office**

**Office européen des brevets**

(19)

(11) **EP 1 703 459 A1**

(12) **EUROPEAN PATENT APPLICATION**

(43) Date of publication:
20.09.2006 Bulletin 2006/38

(51) Int Cl.:
*G06Q 40/00* (2006.01)    *G06Q 90/00* (2006.01)

(21) Application number: 06004685.1

(22) Date of filing: 08.03.2006

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(30) Priority: **17.03.2005 IT TO20050176** | (71) Applicant: **CONSIP S.p.A.**<br>**00198 Roma (IT)**<br><br>(72) Inventor: **Carbone, Arnaldo**<br>**00100 Roma (IT)**<br><br>(74) Representative: **Garavelli, Paolo**<br>**A.BRE.MAR. S.R.L.,**<br>**Via Servais 27**<br>**10146 Torino (IT)** |

(54) **Process for metrically evaluating the functional value of information systems**

(57)    A process is disclosed for metrically evaluating a functional value of information systems comprising the steps of determining a direct economic value (CS) of said information system; determining an indirect economic value of said information system; determining a use value of said information system; determining a functional value ($V_f$) of said information system depending on said direct economic value (CS), on said indirect economic value and on said use value of said information system.

FIG. 1

EP 1 703 459 A1

## Description

The present invention refers to a process for metrically evaluating the functional value of information systems.

The value of an information system is obviously related to its production cost or its size, but it also depends on numerous other factors. Take into account, for example two information systems with equal size and cost, the first one of which is used for computing the provisional balance of a State while the second one for procuring, inventorying and dispensing consumer goods (toner, stationery, registers, etc.): the importance of the first system with respect to the second is evident, but a mode for establishing a finer classification and for objectively stating in some way such difference is not evident. This is what has been required to satisfy, also through the present study.

The concept of functional value of an information system therefore implies the fact that there is an intrinsic importance of an application system which does not solely depend on its sizes and invites to take into account, meaningfully, of the vision of an information system user with respect to its aims, in addition to its functionality, since aims pertaining to the use of the information system are a major component of its global evaluation.

The value of a good in fact has various meanings according to the contexts in which the same is treated, but it is suitable to take it into account first of all with reference to the economic aspect of the object cost, namely related to mechanisms for forming its price (in a wide sense) on the market.

Three aspects for evaluating goods can be, in principle, distinguished:

a) the value due to the necessary effort for its realisation: it is always necessary to evacuate a production cost of the information system (due to activities which are for the majority intellectual), here deemed as equivalent to the cost of its purchasing by a user, for which the real 'original cost' for such goods is not directly visible;

b) the solution validity based on its intrinsic characteristics, determined by production specifications (possible consequences of this aspect on production expenses are not interested herein), which can generate differences in the product success related to its quality and therefore the acceptance by the customers: in the information field, it is possible to evaluate the actual functional quality of an information system depending on a wide range of quality parameters, to be selected according to meaningful quality objectives for end users, defined in detail before producing the software;

c) the external product evaluation, solely based on individual needs of those purchasing it, namely proper motives, both objective (physical characteristics, technical and logistic constraints, for example) and subjective (inclinations, sensibility, preferences, handicap, etc.), which agree with a specific product and not another one, even if with comparable cost and quality: there is a whole set of characteristics, depending on specific needs for which such system has been made for such user, which can therefore be related to the particular conditions in which it must be used and the user expectancies with respect to it, not much as regards its correct operation (already taken into account in its various quality aspects) but rather regarding treated contents, the way of working them and the produced results, namely their significance for direct and indirect (end exploiting individuals) users thereof.

Each one of the three exposed aspects, individually considered, clearly provides only a partial key for evaluating an information system. In order to be able to globally take into account the three above mentioned aspects, therefore, there arises the need of defining the most appropriate metrics for evaluating them and for locating specific modes for composing the same in a unified index. Considerations must necessarily be very different for the single aspects being dealt with, but metrics must anyway have a reference to the economic significance of the evaluation and comply with basic criteria of:

- measurability: elements contributing to the measure must be clearly located and their evaluation methods must be accurately defined, even where the assigned value can depend on a personal judgment (for example: user satisfaction elements);
- comparability: proposed metrics must provide comparable data in different environments and experiences within the same company and, eventually, also between different companies;
- representability: absolute value and comparison between data must be easily displayed for a more immediate usability, in graphic form, of the measure results by user interested in the measures.

What the prior art does not propose however is a process which allows determining the functional value of an information system defining a metrics composition procedure which allows, depending on specific data, measured or detected through independently defined and meaningful metrics for each one of the above three aspects taken into account, building a valorisation and comparison index for the information systems.

Therefore, object of the present invention is solving the above prior art problems, by providing a process for metrically evaluating which allows evaluating information systems from the point of view of their 'functional economy', taken into account above all depending on users views of such systems and, in a wider sense, of all who (stakeholders) have an interest in adopting and using these systems.

Another object of the present invention is providing a process for metrically evaluating the functional value of information systems, which, by providing the rationale for defining both metrics and evaluation techniques, allows sharing an objective valorisation and representation mode for the information system.

A further object of the present invention is providing a process for metrically evaluating the functional value of information systems which can be applied to any information system, independently from its use platform and programming languages and methods, since related only to the meaning which the functional view of an information system assumes, for stakeholders.

The above and other objects and advantages of the invention, which will appear from the following description, are reached by a process for metrically evaluating the functional value of information systems as claimed in claim 1. Preferred embodiments and non-trivial variations of the present invention are the subject matter of the dependent claims.

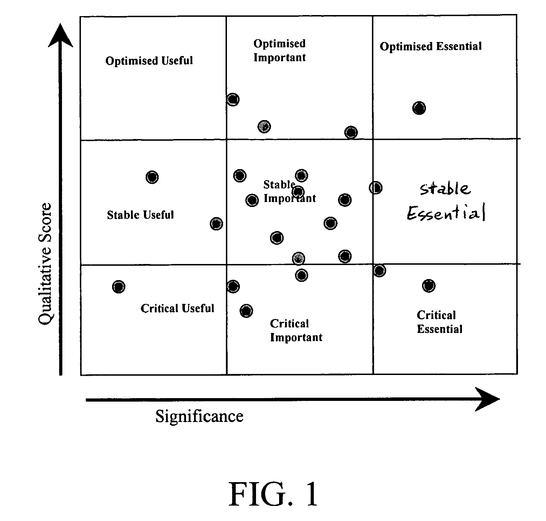

The present invention will be better described by some preferred embodiments thereof, provided as a non-limiting example, with reference to the enclosed drawings, in which the only FIG. 1 shows a diagram resulting from an example of application of the process for metrically evaluating the functional value of information systems according to the present invention.

The process for metrically evaluating the functional value of information systems comprises the steps of:

- determining a direct economic value CS of the information system. The direct economic value of the information system, meant as price to be paid for producing a specific good, represents its most evident economic value related to the final product entity, which must be provided, though with time-varying laws, depending on contingent economic, industrial and legislative conditions of the Country where one operates. The step of determining the direct economic value of the economic system comprises the steps of:

  • determining the software system cost $CS_S$; in case of an information system, in which the application software has a predominant importance, its valorisation is now currently used in terms of functional complexity, taken as dimensional value of the software itself, different from the previous use of a 'physical' measure such as the counting of code lines (LOC) defining it. The relevant measure is the one expressed through the Function Point technique, in the form known through the international organisation IFPUG (International Function Point User Group) and its national affiliates. The above technique distinguishes between a 'basic' value evaluation, defined through a counting of Unadjusted Function Points (UFP), then corrected by a factor which should take into account elements which are external to the software itself but affecting its production, designated as Value Adjustment Factor (VAF), in order to finally produce a global value specified as counting of Adjusted Function Points, namely Application Function Points (AFP). Given the now wide use and the presumable next removal of the above correction factor (VAF) also by the same IFPUG, herein below a metrics will be always taken into account based on a computation in terms of UFP, coinciding with AFPs, even if not specifically mentioned, possibly expressed simply as FP. The dimensional measure performed in Function Point (not differently from what already occurred for code lines) can then be compared with the payment of the necessary effort for realising the software though factors depending on specific contractual situations, market data, productivity suppositions related to the development environment being treated and other more, comprising not only the human intervention cost but also all side aspects supporting such activity. The relationship is generally linear and therefore the software system cost ($CS_s$) can be treated according to the following formula:

$$CS_s = k_c * UFP$$

  where $k_c$ is a constant expressing the unit cost value defined as congruous for compensating the production of a single Function Point. There results a CS evaluation, in terms of price in the considered currency (Euro in Italy). The UFP value can range from a minimum of 1 to a theoretically infinite maximum (more realistically: from a few hundreds to a few thousands) and the multiplying factor can assume a continuous series of values which change a lot in time, but a range of which included between 100 and 1,000 Euros can be nowadays deemed as realistic. The CS value then proceeds from a theoretical minimum of 1 to infinite values, but in practice: from at least 1,000 Euros to a maximum on the order of some million Euros per information system (more exactly: for its application component).

  • determining the infra-structural system cost $CS_i$ of the information system; to the above described evaluation, the cost of the system infra-structural part must be added, not strictly included in production costs for the application part of the information system, but instead essential for its use in production by users (production server, network, workstations, etc.). Such material implies taking into account another cost, $CS_i$ (infra-structural

system cost), which can also assume a predominant importance, to be included in the total evaluation of the product cost.

• determining the direct total cost CS of the information system as function of the software system cost and the software system infra-structural system cost; the direct total cost of the information system is defined as:

$$CS_{tot} = CS_s + CS_i$$

where $CS_s$ is an initial value, possibly to be adjusted again in time depending on functional modifications in the information system which requires its revision. In general, due to maintenance or evaluation reasons, such modifications, if seen on a wide enough time scale, are rather frequent and constant, so that the term assumes a relatively linear growth in time. Instead, $CS_i$ is an initially constant term and with a possible growth with discontinuous jumps in time, detected only in case of technologic upgrades or evolutions of the operating environment. Their sum expresses an evaluation of $CS_{tot}$ in terms of cost in the considered currency (Euro in Italy). The initial infra-structural cost can be sometimes even extremely high in case of some complex information systems, not only as regards the system activated per se, but also because this can be generated as a consequence of technologic renewal objectives, and therefore with the purpose of creating basic technologic infrastructures for operating a set of systems which is wider than the specific one, with which it has been jointly produced. In such case, if it is not possible to do without the introduction of such cost term as stated above, for initially evaluating the information system, the following consequent remarks must however be also taken into account:

1. every new information system operating on the same infra-structural base of a previously generated system has initially an advantage not having to re-organise it new, and therefore not having included it in 'live costs' during its own initial realisation step. In order for such system to be instead correctly evaluated, such costs must be visible when computing the direct economic value;

2. consequently, for a correct division, a cost subdivision of the global infra-structure must therefore be performed on various user information systems (not only the initial one), as a first approximation deriving the single costs proportionally to the complexity of the single information system, measured by the functional system size, through the same already stated UFP; this assuming that the functional application complexity can be deemed as an index of the degree of use of the infra-structure;

3. obviously, the cost subdivision also implies a reduction of already computer costs for the initial information system which, in such a way, is amortised in time, upon the growth of the users of the basic infra-structure given thereby to the general information knowledge base;

4. in case of infra-structures which are built as a stand-alone arrangement (namely initially not linked to a specific use), their cost cannot therefore be considered at all in such evaluations. Their cost will instead be included in the costs of individual information systems, with the above modes, when real users of such infra-structures will start to appear.

Supposing, for example, the case of a first information system which generated a support structure for arranging web sites, including web services, with a cost $CS_{i0}$, let us assume that two systems are then built which are completely used for the same infra-structural apparatuses and services. Assuming, for easiness, the productivity indexes as constant in all cases ($k_c$), the initial project would have costs expressed by formula:

$$(a) \quad CS_{tot0} = CS_{s1} + CS_{i0} = k_c * UFP_1 + CS_{i0}$$

where the first project (characterised by index 1) has a cost for generating the application part $CS_{s1}$, evaluated depending on a size UFP1. Taking similarly into account, respectively for the second and third project, costs $CS_{s2}$ and $CS_{s3}$, due to size evaluations $UFP_2$ and $UFP_3$, and calling $UFP_{tot}$ the global size of user systems, the global cost for the three systems would initially be therefore composed as follows:

$$CS_{glob} = CS_{tot0} + CS_{i2} + CS_{i3} = k_c * UFP_1 + CS_{i0} + k_c * UFP_2 + k_c * UFP_3 =$$

$$k_c * (UFP_1 + UFP_2 + UFP_3) + CS_{i0} = k_c * UFP_{tot} + CS_{i0}$$

where, assuming a total independence among the three counts and then their possible capability of being added, otherwise not ensured by the IFPUG counting modes, $UFP_{tot} = (UFP_1 + UFP_2 + UFP_3)$.

After subdividing the infra-structure costs arisen with the first project also on the other projects, there would instead be the following division for the three systems:

$$CS_{tot1} = CS_{s1} + CS_{i0} * (UFP_1 / UFP_{tot}),$$

which can also be expressed as:

$$CS_{tot1} = UFP_1 (k_c + CS_{i0} / UFP_{tot})$$

where $CS_{tot1}$ designates the total cost of the first project after the division, as well as $CS_{tot2}$ and $CS_{tot3}$ will designate the costs of the following projects on which their part of the infra-structure cost has been divided. The amortisation on the initial expense of the first project is therefore equal to:

$$CS_{tot0} - CS_{tot1} = CS_{i0} (1 - UFP_1 / UFP_{tot}).$$

Similarly:

$$CS_{tot2} = CS_{s2} + CS_{i0} * (UFP_2 / UFP_{tot})$$

namely: $CS_{tot2} = UFP_2 (k_c + CS_{i0} / UFP_{tot})$ and

$$CS_{tot3} = CS_{s3} + CS_{i0} * (UFP_3 / UFP_{tot})$$

namely: $CS_{tot3} = UFP_3 (k_c + CS_{i0} / UFP_{tot})$ obtaining for the global sum:

$$CS_{glob} = CS_{tot0} + CS_{tot2} + CS_{tot3} = UFP_1 (k_c + CS_{i0} / UFP_{tot}) + UFP_2 (k_c +$$

$$CS_{i0} / UFP_{tot}) + UFP_3 (k_c + CS_{i0} / UFP_{tot}) = (UFP_1 + UFP_2 + UFP_3) * (k_c +$$

$$CS_{i0} / UFP_{tot}) = UFP_{tot} * (k_c + CS_{i0} / UFP_{tot}) = k_c * UFP_{tot} + CS_{i0}$$

coinciding with the initial formula (a) apart from the replacement of the specific IP value with the global one.

In compliance with what is stated above, taking into account a single initial project, generating the basic infra-structure used for the following projects and assuming that both the initial project and the following projects can have a varying amount of specific infra-structural costs, namely dealing exclusively with their own environment, the subdivision formulas stated below can therefore be deemed as valid, taking into account that, obviously, such decomposition can be performed only when the re-usability of a share of the arranged infra-structure will be known:

$$CS_{tot0} = CS_{s1} + CS_{i0}$$

from which

$$CS_{tot0} = k_{c1} * UFP_1 + CS_{a1} + CS_b$$

where $k_{c1}$ designates a specific productivity factor for the first project and $CS_{a1}$ and $CS_b$, respectively, designate the infra-structure cost exclusive for the project and the 'basic' infra-structure cost, which can be re-used in following projects, composing the initial cost $CS_{i0}$.

For the global cost of all projects, therefore, there will be:

$$CS_{glob} = \sum_{p=1}^{n+1} \left[ \left( k_{cp} * UFP_p \right) + CS_{ap} + \left( CS_b * \frac{UFP_p}{UFP_{tot}} \right) \right]$$

As regards evaluations performed under prevision, namely in case of estimated costs, previously considered data obviously will have to be replaced with the respective estimations, obtained for every functional size being taken into account (in terms of Function Point) in addition to the provided or decided expense for infra-structural components, composed as already stated;

- determining an in direct economic value of the information system. The indirect economic value is herein deemed as the one induced by the qualitative level of the developed information system. In fact, the quality factors which can be chosen for its characterisation anyway imply an implicit equivalence between provided quality and economies which can be performed by users, though not always exactly able to be formulated in quantitative terms, apart from specific relevant studies. For example, the optimisation of some functionalities allows the user to perform the same activities in a shorter time, the easy learning of the information system allows its adoption in quicker times and with lower training expenses, its maintainability directly affects maintenance costs and related fares, as well as also its low defects, and this further contributes to also reduce possible user inactivity times with consequent increase of average productivity. The choice of parameters to be adopted for measuring the qualitative characteristics of the development of an information system, above all with respect to its application part, can be based on the repertory of requirements and indicators defined by international standards ISO/IEC 9126 or anyway in compliance therewith, such standards being currently extended to also take into account the quality made explicit by the user during his actual product use ("Quality in use"). Depending on such standard, the product must demonstrate to be able to efficiently perform the function for which it has been created. The operating evaluation process for quality characteristics is instead carried out by a similar standard to the previous one: ISO/IEC 14598. The parameters, namely the quality indicators which can be adopted for evaluating the characteristics, are potentially very many and also differentiated for evaluating the same quality aspect of a product. According to the quality policy, the required control and reliability level, in addition to other factors which are absolutely contingent, every company will choose its own evaluation parameters with respect to required quality factors. The indirect cost of the information system can therefore be defined as qualitative score (PQ) in terms of a function of various quality factors, chosen, defined and evaluated as relevant system requirements and which can therefore be expressed in a form like the following:

$$PQ = F\{fq_1, fq_2, fq_3, ..., fq_n\}$$

where F{...} is a function of many quality factors (fq), each one possibly composed of many parameters, whose number can be variable. The global resulting score is an a-dimensional value. The set composed of factors, taken each one individually with its own value, instead composes the quality profile of the information system, whose qualitative score PQ is a synthetic index (the quality profile can instead be pointed out extendedly with more relevant representations, such as for example a Kiviat diagram with standardised axes). In order to make as uniform as possible the evaluation of results of counts which can be obtained in different situations and from data which are potentially very different in the specific substance, the reasonable choice is taking into account the relationship between the provided value for a certain characteristic and a reference value deemed as optimum in the evaluation scale of the particular characteristic in question. After having defined the mathematical relationships for every individual factor being evaluated, it will be necessary to mediate the set of results. In particular, the step of determining the indirect cost of the information system then comprises the steps of:

- defining a series of metrics to be complied with, one for every single provided quality factor. Every metrics can possibly be composite and therefore every single quality factor can in turn be a function of many parameters of the kind:

$$fq = Q\{pq_1, \ pq_2, \ ..., \ pq_n\}$$

where $Q\{...\}$ is a function of many quality parameters (pq), which provide necessary indicators for evaluating a single qualitative product aspect. The resulting global score is an a-dimensional value or a value with dimensions, which can depend on indicators adopted according to followed ways. Dimensionality or not of the single quality factor (though homogeneous treatments are preferred) is not a problem, given its following treatment as a relationship which anyway makes it an a-dimensional numeric contribution to the global function.

- defining for every metrics, namely for every quality factor, an objective $T_{fq}$ to be reached (target). Having called therefore $T_{fq}$ the provided qualitative target, this is seen in general as a threshold value to be exceeded or not exceeded (according to the defined metrics) which must anyway remain for any quality objective because the performance detected in the specific environment can be able to be evaluated. For a more efficient and simple manageability of metric indexes and their combinations, all metrics adopted in a set application evaluation set should always be set algorithmically with the same semantic direction, namely: if the value computed as indicator for a metric implies that its increase points out an improvement, similarly all other metrics should be set so that their increase corresponds to an improvement indication (or vice versa for all). This, obviously, can be easily realised by adopting the inverse (as sign, complement or relationship) of an existing metric, if the same is predefined with a different direction from the adopted one. This will allow a real comparability and componibility of metrics;

- defining a comparison scale with the qualitative objective $T_{fq}$. Two types of cases can be distinguished:

  a) values which get near or far from the considered threshold can be defined proportionally as improving or worsening the performance and therefore there is a proportionality between the specific indicator value and the reached result; or
  b) the distance from the threshold is not meaningful, only being above or below the threshold or equivalent or not to the threshold, is meaningful.
  In case a) two limits, minimum and maximum, can always be defined (also using terms "0" and "∞" if necessary), within which the value can move, one of which corresponds to the worst case and the other to the best case. The qualitative target $T_{fq}$ is pointed out by a well defined numeric value and can possibly be also exceeded under a production with a particularly high quality which can thereby be appreciated. In case b) there is a "all or nothing", "on/off" situation in which simply what is required is present or not, or its presence with different values from the threshold one (increasing or decreasing, this does not matter) is absolutely not meaningful. Data of this kind can always be represented through an expression with a 1 or 0 for reaching the objective or not, where 1 coincides with the qualitative target $T_{fq}$ in such cases (100%);

- measuring the reached value for every single evaluated quality factor with respect to the considered information system. The measured value (fq) must then be related to the target value provided for such measure and considered

as absolute value: $\left| \dfrac{fq}{T_{fq}} \right|$ Such use of the relationship allows the equivalent use of evaluations of the above described types a) and b). In the specific case in which a metric provides for the possibility of having both negative and positive values, and supposing instead that the target is pointed out by a positive value (otherwise an inverse reasoning will be valid), a step must be provided of increasing all measured values of a quantity equal to the absolute value of the minimum negative number which can be reached, and similarly increasing the target placed as denominator of all relationships. For example, in the hypothesis of a target set to 8 with respect to a scale which can start from -10, if two measures have been performed (for two different quality factors which refer to the same scale) which have given as values respectively $fq_1 = -4$ and $fq_2 = +7$, there will be the following results:

$$\left|\frac{fq_1}{T_{fq_1}}\right| = \left|\frac{-4+|-10|}{8+|-10|}\right| = \frac{3}{9} = 0,\overline{3} = 33,\overline{3}\% \quad e$$

$$\left|\frac{fq_2}{T_{fq_2}}\right| = \left|\frac{7+|-10|}{8+|-10|}\right| = \frac{17}{18} = 0,9\overline{4} = 94,\overline{44}\%$$

related to a proportional evaluation to the actual range of available values for measuring, such habit corresponding simply to the use of a scale translation. It must further be taken into account that the previous steps of determining the indirect economic value, apart from the first one, can be iterated completely analogously, if useful, for defining in detail every single quality factor depending on quality parameters which compose it, when treated as relationship;

- computing the indirect economic value as qualitative score PQ defined as arithmetic mean of values of involved quality factors (fq), each one weighed with respect to its own qualitative target $T_{fq}$. The result is then provided by the following formula:

$$PQ = \frac{\sum_1^n \left[\left[\left|fq_1/T_{fq_1}\right| + \left|fq_2/T_{fq_2}\right| + \ldots + \left|fq_n/T_{fq_n}\right|\right]\right]}{n_{fq}}$$

which allows a synthetic definition of the set of quality factors pertaining to a specific product, in this case a specific information system related to the quality profile provided therefor and therefore comparable with any other product whose qualitative profile has been similarly evaluated. The normal excursion of such score, given its nature of mean of percentage values, should be included between 0 and 1 or between 0% and 100%. For an adequate calibration of such score, the exception due to what is described for the above case a) must however be taken into account: if the provided quality with the product is particularly high, it could generate a relative score greater than 1 (quality factor value greater than the provided target value). In such case, for every measured quality factor, its possible result excellence must anyway be limited in the evaluation (also because not required a priori by the users and therefore over a certain limit, it can correspond to a waste of resources); therefore, should the obtained result exceed 120% of the target, its value will anyway be fixed to such limit (1.2): namely, a quality excess of 20% is the maximum justifiable one which can be deemed useful with respect to users. Consequently, the real limits within which the qualitative score PQ excursion can be taken into account are 0 and 1.2, namely between 0% and 120%. In case of evaluation in initial steps (estimations), it will obviously not be possible to have available measuring results of involved characteristics and therefore it will be necessary to trace a profile simply of the desired product quality, to be possibly compared afterwards with the actual qualitative score. Data to be considered will therefore be the expected value for the considered characteristic and the comparison term will be the full-scale value within the measuring parameter. An absolute indication cannot in such case be given, since the choice of the reference will also depend on the evaluation direction of considered data: if, as more frequent and expectable, the value growth corresponds to a higher result positivity, the comparison term will be the maximum value which can be reached (hypothetically but realistically) by the selected index, otherwise it will be the minimum value. Having therefore assumed the growth case as an improving case and having therefore considered the maximum value which can be reached ($M_{fq}$) as reference terms to which the prefixed target value for the evaluation index of the considered characteristic ($T_{fq}$) must be compared, an Estimated Qualitative Score ($PQ_S$) can be defined through a similar formula to the one discussed above for the computation algorithm on measured data:

$$PQ_s = \frac{\sum_{1}^{n}\left[\left|T_{fq_1}/M_{fq_1}\right| + \left|T_{fq_2}/M_{fq_2}\right| + \ldots + \left|T_{fq_n}/M_{fq_n}\right|\right]}{n_{fq}}$$

where the result excursion is necessarily limited between 0 and 1 (0-100%). Purpose of such formula is providing a synthetic index of the required quality for the information system to be developed, comparable with similar estimate evaluations for other information projects (for example for defining a minimum qualitative standard under which one must not drop when formulating the projects). The term can also be used as approximate indication in a representation of the synthetic index of the functional value, mentioned below, estimated beforehand, but per se it is not comparable unless with similarly estimated scores. Therefore, it cannot be used for a comparison with the actual balancing evaluation of the qualitative score, since, due to the same nature of the composition of used relationships, this would not make sense, being evaluated with respect to different references. The actual evaluation of the qualitative score could in fact provide highly better results (even 100%) of the estimated qualitative score if the supplier correctly complies with all system production engagements (PQ = 100%) without this having been provided in requirements specifications with the maximum absolute possible of quality requirements and therefore owner of a $PQ_s$ <100%. The same qualitative score (PQ) is, however, already composed per se of the composition of expected quality evaluations (target) and produced quality (measured quality factor), summarising therefore the result of a comparison between the two. Alternatively, due to needs of actual comparability of the indirect economic value before and after system evolutions, it is necessary to directly compare the two respective quality profiles, expressed for example as Kiviat diagram (also called "radar diagram"), factor by factor, standardising the values on axes in order to be able to represent them and only for those factors coinciding between the two profiles (different evaluation criteria of the same system could in fact have occurred in time, which, would not instead affect the comparability of the qualitative score computed as balance). In fact, given the presumable different dimensional expression of every single factor (gg/p, %, test number, produced pages, etc.) the simple additivity between them cannot absolutely be considered unless as a relationship (as in fact previously dealt with) and therefore a synthetic comparability cannot be realised of two sets of the above factors, before and after the evolution;

- determining a use value of the information system; the use value is the one directly related to specific purposes which the information system had to perform on account of the user, and therefore directly related to benefits expected from it, even depending on paid costs, mainly those related to the direct economic value of the information system. Its meaning is detecting the economic value of the information system not only as its commercial cost, but also under the four major aspects of redditivity of administrative investment induced by the use of the information system, economic risk which a malfunction of the information system could induce, managing and maintaining economy of the information system and savings which can be deducted from the re-use of the information system itself, aspects to which some specific use factors contribute together with system quality parameters which have already previously mentioned. Unse factors which can be located, in a form which can be distinguished by environment and contents from factors in play in functional and qualitative aspects, are those listed below:

  1. frequency (F);
  2. extension (E);
  3. relevance (R);
  4. manageability (G);
  5. shareability (C).

The composition of the above use factors can provide an evaluation parameter, which is substantially linked to the actual use modes of the information system by the users, and therefore the importance and meaning which such use has for users themselves. The pointed out factors are individually evaluated according to sets of parameters (different case by case) described below, classified depending on qualitative considerations which anyway allow locating an accurate level within a predefined scale. Such level therefore assigns a quantitative gradation to every use factor which allows its metric use in evaluation and comparison algorithms. Depending on what is stated above, the step of determining the use value S of the information system therefore comprises the steps of:

• determining the use factor with frequency F; the use frequency herein taken into account must be meant in the two possible senses:

depending on the required availability to the information system for foreseeing merit needs and on the actual use periodicity of the information system itself, obviously not coinciding with the

availability required thereto. This since the first has a

relationship with activation and management costs (maintenance, recovery, etc.) while the second one has a more specific

relationship with the need of using the information system in

current activities. An extension function F is then taken into account, which depends on two parameters:

$$F = F\{D, P\}$$

where F{...} is function of availability (D) and use periodicity (P) of the information system wich are evaluated depending on definitions included in the following Table 1:

**Table 1**

| Parameter | Definition | Allowable values |
|---|---|---|
| D | Availability: period in which the information system is actually active and available to use (independently from its actual exploitation) | Values are defined depending on the highest, which can be currently assigned, among the following classes: <br> D = 1 for use with information system activation upon user request <br> D = 2 when the information system must promptly and permanently be available during standard working hours (variable interval according to organisation, supposed as an average of 8-10 hours) <br> D = 3 when the information system must promptly and permanently be available during more hours than the standard working hours (variable interval according to organisation, for example: 8 to 24) <br> D = 4 for systems available 24/24h during all working days <br> D = 5 for systems available 24/24h for 365 days/ tear (apart from possible short technical stops for managing reasons). |
| P | Periodicity: data related to common use frequency of the information system by users. | Values are defined depending on the highest, which can be currently assigned, among the folowing classes: <br> P = 1 for occasional use, according to needs, generaly not predefined <br> P = 2 for use in specific period or with monthly periods as maximum <br> P = 3 in case of use with a minimum weekly frequency <br> P = 4 in case of regular and daily use <br> P = 5 for a continuous daily use (such as in counter activities, for example). |

Given the mutual strengthening character of their own valence, it is suitable to compose, through a product, the involved parameters and then define the frequency factor in the following form:

$$F = D * P$$

with a theoretical range of possible discrete values (namely not comprising all integer values being present in the range) included between 1 and 25;

• determining the extension use factor E; the use extension here taken into account must be meant also in many possible senses: depending on the variety of types of system users and their number, as well as depending on what its installation is extended, even geographically. Let us then take into account an extension function E depending on three parameters:

$$E = F\{n, L, C\}$$

where F{...} is a function of numerosity (n), location (L) and categorisation (C) of information system users, evaluated depending on definitions included in the following Table 2:

**Table 2**

| Parameter | Definition | Allowable values |
|---|---|---|
| n | Numerosity: the amount of use stations of the information system, meant both as control consoles for technical users and as installations n of user interfaces in case of systems requiring a specific client for operating or the (possibly estimated) number of access points to the information system in case of use via browser on local or geographic network. | The value to be taken into accoun is the power defining the limit order of magnitue of relevant numerosity. Therefore: n = 1 for 1 to 10 workstations n = 2 for 11 to 100 workstations n = 3 for 101 to 1,000 workstations n = 4 for 1,001 to 10,000 workstations n = 5 for 10,001 to 100,000 workstations n = 6 for 100,001 to 1,000,000 workstations. |
| L | Location: geographic extension of use of the information system (from single office to worldwide use). | Values are defined depending on the highest, which can be adequately assigned, among the following classes: L = 1 for a use limited to a single office or a similar organisation structure L = 2 for a use within a local network, presumably confined in a single bulding L = 3 for use in a network extended at province or regional level L = 4 for use in a network with national character L = 5 for use in an extra-national network. |
| C | Categorisation: extension of administrative/ managing/information use of the information system | Values are defined depending on the highest, which can be adequately assigned, among the following classes: C = 1 for a use limited to a single isolated administrative function, possibly with a single user C = 2 for a use within a single administrative category of users belonging to an organisation C = 3 for a use by many categories of users belonging to the same organisation C = 4 for a use by many categories of users belonging to different organisations C = 5 for a use by a moltitude of users belonging to many categories and organisation which cannot be all exactly identified. |

Given the character of mutual influence on complexity and criticality of functional use, also here the above three terms are naturally composed in a product form to provide the extension factor, which can be made as:

$$E = n * L * C$$

with a theoretical range of possible discrete values included between 1 and 150;

- determining the relevance use factor R; the term relevance means the substantial meaning which the use of the information system has for the users. It is perhaps the most important item, since it is related to the same primary objects for which the information system originated and still before, to fundamental processes and needs of users themselves. This factor can also be defined through different parameters which comply with main evaluation aspects. Let us then consider a relevance function R depending on two parameters:

$$R = F\{V, I\}$$

where F{...} is a function of User Vision (V) and Incidence (I) of the function automated by the information system, which are evaluated depending on definitions included in the following Table 3:

**Table 3**

| Parameter | Definition | Allowable values |
|---|---|---|
| V | User vision: administrative competence use in which the primary user of the information system moves. In case of many user categories, it is the elected user for which the information system has been generated. | Values are defined depending on the highest, which can be adequately assigned, among the following classes:<br>V = 1 in case of use by a local operator to which no responsabilities are assigned on processes connected with the information system use<br>V = 2 in case of use by an administrative / managing officer with responsibilities on connected processes<br>V = 3 for a use by representatives of administrative bodies with specific directive tasks<br>V = 4 for a use by representatives of central controlling bodies<br>V = 5 for a use by Top Managers, of a relevant company or public body. |
| I | Incidence: administrative / managing role of functions automated by the information system being used. | Values are defined depending on the highest, which can be adequately assigned, among the following classes:<br>I = 1 when the information system is only an aid in local office functions<br>I = 2 when the automated function is related to an administrative or managing process related to a specific organisation sector<br>I = 3 when the automated function is related to an administrative or managing process with a global importance for the organisation<br>I = 4 if they are general controlling or decision-supporting procedures<br>I = 5 support to global evaluation and strategic activities address. |

Similarly to what already performed for previously-treated factors, the parameters described through products are composed, obtaining the following relevant formulation:

$$R = V * I$$

with a theoretical range of possible discrete values comprised between 1 and 25;

- determining the manageability use factor G; the term manageability means the set of characteristics of information system and connected services which allow a managing and problem-preventing economy. The relevant factor is evaluated through the use of two different parameters composed in the following function:

$$G = F\{A, M\}$$

where F{...} is a function of Assistibility (A) of the information system user and its Maintainability (M), namely the managing effort required to ensure an efficient use, which are evaluated depending on definitions included in the following Table 4:

**Table 4**

| Parameter | Definition | Allowable values |
|---|---|---|
| A | Assistibility: availability of supports, materials, elettronics, professionals to assist the user in case of problems or anyway with not ordinary need dealing with affected functionality. | Values are defined depending on the highest, which can be adequately assigned, among the following classes:<br><br>A = 1 if there are no specific provided supports apart from basic manuals (user manual, managing manual, etc.) and assistance is not organised beforehand but managed according to needs<br><br>A = 2 in case of presence of electronic supports for guiding the user in operations (contextual menus, online help, video, etc.) and in planned periodic assistance.<br><br>A = 3 if there are electronic aids to guide location, resolution and/or communication of problems (autocall, etc.) with possible direct contact (e-mail, telephone) with an assistance service for supporting problem solving which is not specific for the involved system.<br><br>A = 4 having available electronic and organised assistance tools through specific Help Desk (e-mail, telephone) for dispatching and planning assistance calls followed by interventions, generally within 48 hours.<br><br>A = 5 presence, in addition to electronic tools, of an organised assistance through multi-level Help desk for various technical needs, accessed through green number or similar facilities, with possible urgent intervention. |
| M | Maintainability: minimum activities necessary for ordinary maintenance of user functionality. | Values are defined depending on the highest, which can be adequately assigned, among the following classes:<br>M = 1 if the information system requires daily activities of monitoring, assistance and execution control. |

(continued)

| Parameter | Definition | Allowable values |
|---|---|---|
| | | M = 2 if regular weekly activities are necessary for the optimised structure management. M = 3 when regular monthly activities are required for control, monitoring, backup and/or update. M = 4 if the information system requires only one or some revisions of its resources of the update needs during the year. M = 5 if the information system does not require any specific periodic maintenance, apart from occasional interventions, upon request, for particular and contingent reasons. |

It is therefore possible to define also the manageability factor as product of parameters:

$$G = A * M$$

with a theoretical intervention of possible discrete values included between 1 and 25;
• determining the shareability use factor C; the term shareability means taking into account those possibilities of re-using portions of the logic being present in an information system or data flows managed thereby which allow a company economy or which imply a higher risk of impact (Note: shared flows are a subject which is also dealt with by evaluations through counting the FP but under the different aspect of a contribution to assembly complexity). A shareability function is then taken into account, which depends on two parameters:

$$C = F\{S, F\}$$

where F{...} s a function of the logic cooperative Structure (S) of the information system and the relationships of data Flows (F) managed with other systems, which are evaluated depending on definitions included in the following Table 5:

**Table 5**

| Parameter | Definition | Allowable values |
|---|---|---|
| S | Structuring: degree of participation to complex systems of the specific relevant information system. | Values are defined depending on the highest, which can be adequately assigned, among the following classes: S = 1 in case of standalone information system which has no relationships with other systems. S = 2 in case of an information system which uses shared and centralised code modules (standard routine recall) with other systems (also for replicas). S = 3 in case of an information system which uses some functions provided by other system to generate its own outputs S = 4 in case of an information system in which part of functions are made available to be used in other systems. S = 5 in case of a completely re-used information system, namely which can be recalled by one or more information systems to perform specific services. |

(continued)

| Parameter | Definition | Allowable values |
|---|---|---|
| F | Exploitation: mode for sharing and exchanging data with other components of a set of information systems. | Values are defined depending on the highest, which can be adequately assigned, among the following classes:<br><br>F = 1 for a standalone information system which does not exchange data with other systems.<br><br>F = 2 for an information system which interfaces other internal or external ones, by exchanging sequential input or output data flows.<br><br>F = 3 for an information system which shares readable data bases with other internal systems and/or external bodies.<br><br>F = 4 for an information system which shares writable data bases with other internal systems and/or external bodies.<br><br>F = 5 for an information system wihch manages creation and modification of the structure of readable and writable shared data bases with other internal systemns and/or external bodies. |

Again, described parameters are composed through products, obtaining the following shareability formulation:

$$C = S * F$$

with a theoretical range of possible discrete values included between 1 and 25;

- determining the use value as a significance indicator S depending on the following use factors: frequency F, extension E, relevance R, manageability G and shareability C. At general level, treating the significance S, given the wide independence between single factors being taken into account, can be performed through a simple linear combination of considered factors, thereby assuming the following form:

$$S = \alpha F + \beta E + \gamma R + \delta G + \varepsilon C$$

where F, E, R, G, C are respectively frequency, extension, relevance, manageability and shareability, the five already introduced use factors, while $\alpha$, $\beta$, $\gamma$, $\delta$ and $\varepsilon$ are multiplicating constants which are subjected to represent weights assigned to individual factors. The use of specific weights for evaluating the contribution of every factor to the global sum can allow a greater modulation of the range of the resulting indicator and its progression, but, being such weights presumably adapted to be defined only depending on purely subjective indications of involved consultants, this would make the measured values not comparable with similar application managing structures of different companies. It is therefore deemed convenient, as a first approximation, to take into account a simplified form of the exposed equation in which all coefficients of the terms are set equal to 1:

$$S = F + E + R + G + C$$

after which, there is an excursion of the significance value from a minimum of 5 to a maximum of 250, assuming that the maximum numerosity (one million) considered in the computation of the extension factor is really a given real limit. Values which are really able to be assumed by the significance function cannot anyway be homologated to the subset of integers included between mentioned limits, but they represent a discrete grouping of values in such range, related to the discrete values assumed by every single use factor. Having to explicit the same formula depending on previously evaluated individual parameters, the following results:

$$S = D * P + n * L \cdot C + V * I + A * M + S * F$$

The significance evaluation, due to the same nature of its components, can be easily performed both under initial estimation, depending on feasibility studies, analysis or other requirement documents, and in case of final check of the realised system. A meaningful use of the metrics itself can also be its check in time (metric monitoring) for evaluating the lower or greater importance that the realised information system assumes in its operating use. Such check makes a particular sense depending on frequent changes to which actually many of the considered parameters are subjected during the average life of an information system (number of users, data sharing, maintenance conditions, etc.);

- determining a functional value of the information system depending on the direct economic value CS, the indirect economic value and the use value of the information system. Given the characteristics of the relevant functions, the same can be shown as independent variables in pluridimensional spaces, for example representing S on axis x, PQ on axis y and CS on axis z. Such metric representation can imply the introduction of a corrective multiplying factor for every variable, depending on a possible specific calibration of every considered information system and related to its peculiar characteristics, also depending on searched objectives with the use of the defined metrics. In such case, values on axes x, y and z of the representation should be respectively proportional to terms *a\*S, b\*PQ, c\*CS*. Similarly, however, to what has been already previously stated, it is not deemed useful and adequate, now, to introduce beforehand such terms a, b, c, since they could improve the local presentation of counted cases, but they would decrease their comparability in wider environments. Therefore, herein below the 'pure' functional values will be used, resulting from the counting of every single metrics. Therefore, by representing on the three axes the computed values for each one of the three functions for every single information system subjected to evaluation, and considering them as coordinates, the global representation of the result is obtained as a point in the three-dimensional space defined by such axes. It is therefore possible to associate the concept of functional evaluation of an information system with a triad of numbers which concisely define its characteristics and make it possible to compare it with other application realities. It is therefore possible to define as functional value of an information system the following point:

$$V_f \ (S, \ PQ, \ CS)$$

represented in a limited three-dimensional space. In fact, the representation domain of such value is a parallelepiped whose maximum base is 250x120 and its height is theoretically infinite, but in practice presumably always below 10,000,000. The representation in a single graphic display of the placement of various information systems can therefore allow an immediate comparison between them for each one of the three dimensions taken into account. Having to establish a still more synthetic evaluation mode of what is measured, through a single reference parameter, the only correct data which can be used is the distance of the functional value (namely the point identified by the above triad of coordinates) from the origin of used axes which has the following form:

$$Is_{vf} = \sqrt{S^2 + PQ^2 + CS^2}$$

where $Is_{vf}$ is the synthetic index of the functional value of the information system.
Such index has a clear significativity limit due to the strong difference between the excursion of the first two values and the excursion of the third one, implying a high weight of this latter one, whose risk is to completely condition the data represented by the index itself. As corrective, it is possible to take into account the use of CS divided by one hundred (scale evaluated in hundreds of Euros rather than in Euros, substantially), instead of the integer value of the System Cost, thereby obtaining terms which are all of a comparable order of magnitude. The correct formula is therefore the following:

$$Is_{vf} = \sqrt{S^2 + PQ^2 + \left(\frac{CS}{1000}\right)^2}$$

which has also inside an implicit balancing which allows the product cost value to affect only as corrective value with respect to the significance and the qualitative score in case of moderate cost level (< 100,000 Euros) while it has a much greater sense in case of strong expense for acquiring the product whose order of magnitude becomes of a dignity which is equal or dominant with respect to other terms. There is a different solution possibility evaluating such synthetic index in the universe of the considered information systems only: it is possible, once having defined the CS value for each of the systems, to use the highest detected CS ($CS_{max}$) as comparison weight for the other systems and consider the value in percentage factor of each one of them with respect to the above one. The formulation in such case would be modified as follows:

$$Is_{vf} = \sqrt{S^2 + PQ^2 + \left(\frac{CS*100}{CS_{max}}\right)^2}$$

where relationship $CS/CS_{max}$ obviously would change between 0 (theoretical) and 1, generating terms between 0 and 100. Naturally, this metric representation is not absolute any more, but related to the consided universe: it would therefore be wrong to use such value to compare other information realities, even through the same computations, if related to different values of $CS_{max}$. In addition to mentioned problems, there are obvious logic limits, like in all synthetic representations, since one risks, for example, to provide an information system, developed at high costs but with low quality and medimum importance, with another one, which has a secondary use but is well produced and has a medium cost. Therefore, the use of such synthetic index must be taken into account only when there is enough homogeneity in the types of analysed information systems, or as first indication, preliminary to more accurate analyses. What has been discussed previusly for the synthetic index has a more general valence also as regards the functional value: if represented, even graphically, with the replacement of the coordinate CS with CS/1000 (or by adopting the $CS_{max}$ technique), the global representation of the evaluations result and therefore the possible judgment about the significance of such results is certainly an advantage. By designating, for simplicity, the used relationship as $CS_{100}$, the following point can therefore be defined:

$$V_f\ (S,\ PQ,\ CS_{100})$$

as functional value of an information system in the logic space defined by significance values, qualitative score and cents of system cost values (namelye system cost in cents of Euro).

What has been stated so far, defining some counting modes of the characteristics of an information system and resulting in a definition of its global functional value, must obviously be tested in field, through realising the (application, technical, etc.) significativity for users of the measure results, namely verifying that the resulting classification also corrresponds to what has been perceived with respect to local company values.

From this, further considerations and revisions of previous definitions could occur, above all related to metric scales defined for measuring the various parameters, which can further be stated and detailed, also through support checklists.

The definition must further be carefully considered, before operating, of the objective for which such measures has to be adopted: according to the cases, it can be more useful to evaluate and compare a single aspect rather than the glocal value of the set of three, or even only a subset thereof. Such objective can for example deal with:

- ■ priorising system development and maintenance activities for their efficient planning with adequate risk management;
- ■ dividing economic resources for system managing and evolution, including connected infrastructures;
- ■ defining evolution tactics and strategies of the system park: re-engineering, migrations, conversions, etc. or more general support to decisions.

As application example of the method, only its bidimensional, not detailed representation will be taken into account, due to tracing significance and qualitative score values for every evaluated information system. In such case, it is possible to have an approximate partitioning of the application park by dividing the portion of plane delimited from the positive axes part into qualitatively meaninfgul quadrants.

Quadrants are obtained as result of the division of each of the axes, in the part included between origin and maximum point, into three equivalent segment. There is therefore a semantic three-fold division on every axis, respectively represented by terms:

■ Useful / Important / Essential for the significance of Information systems, and
■ Critical / Stable / Optimised for their qualitative score (in case of use of dimension CS, a similar division into three could be performed, dsignating the same as Systems with Reduced / Sensible /

High Cost in an ascending scale on the related axis).

The mentioned divisions therefore generate nine quadrants which cover the portion of plane in which results are available of the measures performed on one or more information systems. Each one of such quadrants is identified by the combination of qualitative labels of portions of axes to which they refer. There will be therefore a graphic evidence of the classificability of systems into the following nine categories:

| | |
|---|---|
| Critical Useful: | Not fundamental systems with scarce use quality |
| Stable Useful: | Not fundamental systems operating in an ordinarily satisfactory way |
| Optimised Useful: | Not fundamental systems with complete user satisfaction |
| Critical Important: | Fundamental systems with scarce use quality |
| Stable Important: | Fundamental systems operating in a satisfactory way |
| Optimised Important: | Fundamental systems with complete user satisfaction |
| Critical Essential: | Systems whose function cannot be done without and with scarce use quality |
| Stable Essential: | Systems whose function cannot be done without and operating in an ordinarily satisfactory way |
| Optimised Essential: | Systems whose function cannot be done without and completely satisfactory for users |

Depending on the above categories, the representation of performed measures then generates various grouping areas in the plane of individual points $V_f(S, PQ,)$, which provides a reason for the characteristics of the considered systems, with results of the type as shown in FIG. 1. In the case shown (a collection of the evaluation of 23 information systems), it is already possible to perform first appreciations about the observed distribution and in the specific case, for example, to focus the attention on the needs for revising the systems classified as "Critical Essential" for correcting a clearly risky situation.

As already previously mentioned, the possible multiple applications of the process according to the present invention will substantially depend on the evaluation objectives which an organisation aims to reach through its own metric program, but the computed values depending on what is stated can anyway be compared also between different organisations. The process according to the present invention can obviously be further applied independently from the system type and dimension, apart from the possible different way of counting the necessary parameters for evaluation.

It is clear that the present invention further refers to a computer program comprising computer program code means adapted to perform all or part of the steps of the above described process, when such program is run on at least one computer.

**Claims**

1.  Process for metrically evaluating a functional value of information systems, **characterised in that** it comprises the steps of:

    - determining a direct economic value (CS) of said information system;
    - determining an indirect economic value of said information system;
    - determining a use value of said information system;
    - determining a functional value ($V_f$) of said information system depending on said direct economic value (CS), on said indirect economic value and on said use value of said information system.

2.  Process according to claim 1, **characterised in that** said step of determining a direct economic value (CS) of said information system comprises the steps of:

- determining a software system cost ($CS_s$) of said information system;
- determining an infra-structural system cost ($CS_i$) of said information system;
- determining said direct total cost (CS) of said information system depending on said software system cost ($CS_s$) and said infra-structural system cost ($CS_i$).

3. Process according to claim 1, **characterised in that** said cost of said indirect economic value of said information system is a qualitative score (PQ) depending on quality factors (fq).

4. Process according to claim 1 or 3, **characterised in that** said step of determining an indirect economic value of said information system comprises the steps of:

- defining a metrics for each one of said quality factors (fq);
- defining for each one of said metrics, a qualitative objective ($T_{fq}$) to be reached;
- defining a comparison scale with each one of said qualitative objectives ($T_{fq}$);
- measuring a reached value for each one of said quality factors (fq) evaluated with respect to said considered information system;
- computing said qualitative score (PQ) as arithmetic mean of said values of said involved quality factors (fq), each one weighed with respect to said own qualitative objective ($T_{fq}$).

5. Process according to claim 1, **characterised in that** said use value of said information system is a function of use factors.

6. Process according to claim 5, **characterised in that** said use factors are frequency (F), extension (E), relevance (R), manageability (G), shareability (C).

7. Process according to claim 1, 5 or 6, **characterised in that** said step of determining an use value of said information system comprises the steps of:

- determining said frequency use factor (F);
- determining said extensione use factor (E);
- determining said relevance use factor (R);
- determining said manageability use factor (G);
- determining said shareability use factor (C);
- determining said use value as significance indicator (S) depending on said use factors of frequency (F), extension (E), relevance (R), manageability (G) and shareability (C).

8. Process according to claim 1, **characterised in that** said functional value ($V_f$) is represented by a point in a Cartesian reference system whose coordinates are (S, PQ, CS).

9. Process according to claim 1, **characterised in that** it comprises the step of determining a synthetic index ($Is_{vf}$) of said functional value ($V_f$) as $Is_{vf} = \sqrt{S^2 + PQ^2 + CS^2}$ .

10. Process according to claim 1, **characterised in that** it comprises the step of determining a synthetic index ($Is_{vf}$) of said functional value($V_f$) as $Is_{vf} = \sqrt{S^2 + PQ^2 + \left(\dfrac{CS}{1000}\right)^2}$ .

11. Process according to claim 1, **characterised in that** it comprises the step of determining a synthetic index ($Is_{vf}$) of said functional value ($V_f$) as $Is_{vf} = \sqrt{S^2 + PQ^2 + \left(\dfrac{CS*100}{CS_{max}}\right)^2}$ .

12. Computer program comprising computer program code means adapted to perform all steps of said process according to any of the previous claims when the program is run on a computer.

13. Computer program according to claim 12 and contained on a computer readable medium.

FIG. 1

**European Patent Office**

**DECLARATION**

which under Rule 45 of the European Patent Convention EP 06 00 4685
shall be considered, for the purposes of subsequent
proceedings, as the European search report

**Application Number**

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|

Reason:

INV.
G06Q40/00
G06Q90/00

The claims relate to subject matter
excluded from patentability under Art.
52(2) and (3) EPC. Given that the claims
are formulated in terms of such subject
matter or merely specify commonplace
features relating to its technological
implementation, the search examiner could
not establish any technical problem which
might potentially have required an
inventive step to overcome. Hence it was
not possible to carry out a meaningful
search into the state of the art (Rule 45
EPC). See also Guidelines Part B Chapter
VIII, 1-3 and Information from the EPO, OJ
5/2002, 248.

The applicant's attention is drawn to the
fact that a search may be carried out
during examination following a declaration
of no search under Rule 45 EPC, should the
problems which led to the declaration
being issued be overcome (see EPC
Guideline C-VI, 8.5).
-----

| Place of search | Date | Examiner |
|---|---|---|
| Munich | 18 May 2006 | Aupiais, B |

EPO FORM 1504 (P04C37)